# EUROPEAN PATENT APPLICATION

(11) **EP 4 787 161 A1**
(43) Date of publication of application: **05.08.2026**
(21) Application number: 25858020.8
(22) Date of filing: 11.06.2025
(51) Int. Cl.: G06F 9/455

(54) **COMMAND PROCESSING METHOD AND RELATED DEVICE**

(30) Priority: 29.11.2024 CN 202411749135
(71) Applicant: Hygon Information Technology Co., Ltd., Binhai New Area, Tianjin 300392 (CN)
(72) Inventor: CHEN, Shan, Tianjin 300392 (CN); YING, Zhiwei, Tianjin 300392 (CN)
(74) Representative: Metroconsult Srl
(86) International application number: PCT/CN2025/100423
(87) International publication number: WO 2026/113329

(57) **Abstract**

Embodiments of the present disclosure provide a command processing method and related device. The command processing method applied to a processor includes: acquiring command encryption information sent by a virtual machine monitor, and the command encryption information includes a memory address of target command data and a virtual device identifier of a target virtual device; determining memory key information corresponding to the target virtual machine according to the virtual device identifier; decrypting to obtain a plaintext of the target command data based on the memory key information and the memory address of the target command data; and executing a target command based on the plaintext of the target command data, to obtain a command result of the target command. According to the command processing method and the related device, the data security of the virtual machine in the process of running the virtual device is improved.

## Description

### RELATED APPLICATION

The present disclosure claims priority to Chinese Patent Application NO. 202411749135.8, entitled of "command processing method and related device", and filed on November 29, 2024, which is hereby incorporated by reference its entirety.

### TECHNICAL FIELD

Embodiments of the present disclosure relate to the field of virtual machine security, and particularly to a command processing method and related device.

### BACKGROUND

With the development of new technologies such as cloud computing and big data, virtualization technology is increasingly widely used. Through the virtualization technology, a physical host can virtualize and obtain a plurality of Virtual Machines (VMs), thereby achieving the efficient utilization of hardware resources of the physical host. In the virtualization technology, peripheral resources may be virtualized into virtual devices and then allocated to the virtual machines, thereby achieving efficient utilization of the peripheral resources.

However, conventional virtual machines pose security risks in the process of running the virtual devices.

### SUMMARY

In view of the above problem, the embodiments of the present disclosure provide a command processing method and related device, which improve the data security of a virtual machine in the process of running a virtual device.

In order to achieve the above objective, the embodiments of the present disclosure provide the following technical solutions.

In a first aspect, an embodiment of the present disclosure provides a command processing method which is applied to a processor, and the command processing method includes:
acquiring command encryption information sent by a virtual machine monitor, and the command encryption information includes a memory address of target command data and a virtual device identifier of a target virtual device, and the memory encrypts the target command data using a memory key corresponding to the target virtual machine;
determining memory key information corresponding to the target virtual machine according to the virtual device identifier;
decrypting to obtain a plaintext of the target command data based on the memory key information and the memory address of the target command data; and
executing a target command based on the plaintext of the target command data to obtain a command result of the target command.

Optionally, determining the memory key information corresponding to the target virtual machine according to the virtual device identifier includes: determining the memory key information according to preconfigured device attribute information of the virtual device in the processor.

Optionally, after executing the target command based on the plaintext of the target command data to obtain the command result of the target command, the method further includes:
encrypting the command result of the target command using the memory key information, and storing the encrypted command result of the target command in the memory; and
feeding back a result acquisition notification message of the command result to the virtual machine monitor, so that the virtual machine monitor forwards the result acquisition notification message to the target virtual machine.

Optionally, encrypting the command result of the target command based on the memory key information, and storing the encrypted command result of the target command in the memory includes:
determining the virtual device identifier of the target virtual device corresponding to the command result;
determining the memory key information of the target virtual machine corresponding to the command result according to the virtual device identifier; and
encrypting the command result of the target command using the memory key corresponding to the memory key information, and storing the encrypted command result of the target command in the memory.

Optionally, before acquiring command encryption information sent by the virtual machine monitor, the method further includes:
creating a target virtual device in response to a virtual device creation request sent by the virtual machine monitor, and feeding back a virtual device identifier of the target virtual device to the virtual machine monitor; and
establishing, after the target virtual device is allocated to the target virtual machine by the virtual machine monitor, a corresponding relationship between the virtual device identifier and the memory key information of the target virtual machine according to allocation information fed back by the virtual machine monitor.

Optionally, establishing the corresponding relationship between the virtual device identifier and the memory key information of the target virtual machine according to allocation information fed back by the virtual machine monitor includes:
recording the allocation information into device attribute information corresponding to the target virtual device;
querying and obtaining the memory key information of the target virtual device; and
recording the memory key information into the device attribute information corresponding to the target virtual device.

In a second aspect, an embodiment of the present disclosure provides a command processing method applied to a virtual machine monitor, including:
acquiring command initial information sent by a target virtual machine, wherein the command initial information includes a memory address of target command data, and the memory encrypts the target command data using a memory key corresponding to the target virtual machine;
assigning a virtual device identifier of a target virtual device to the command initial information, and taking the command initial information and the virtual device identifier as command encryption information; and
sending the command encryption information to a processor, so that the processor executes the command processing method according to the first aspect.

Optionally, assigning the virtual device identifier of the target virtual device to the command initial information includes:
determining a virtual machine identifier of the target virtual machine that sends the command initial information;
querying a virtual device identifier of a virtual device configured for the target virtual machine according to the virtual machine identifier; and
configuring the virtual device identifier as a tag to the command initial information to form the command encryption information.

Optionally, after sending the command encryption information to the processor, so that the processor performs the command processing method according to the first aspect, the method further includes:
acquiring and forwarding a result acquisition notification message fed back by the processor to the target virtual machine.

Optionally, before acquiring command initial information sent by the target virtual machine, the method further includes:
sending a virtual device creation request to the processor, so that the processor creates the target virtual device in response to the virtual device creation request, and feeds back a virtual device identifier of the target virtual device;
allocating the target virtual device to the target virtual machine, and recording allocation information of the target virtual device and the target virtual machine; and
feeding back the allocation information to the processor, so that the processor establishes a corresponding relationship between the virtual device identifier and memory key information of the target virtual machine according to the allocation information.

In a third aspect, an embodiment of the present disclosure provides a command processing method applied to a target virtual machine that is allocated with a target virtual device, including:
writing target command data into a memory, and the memory encrypts the target command data using a memory key corresponding to the target virtual machine; and
sending command initial information to a virtual machine monitor, and the command initial information includes a memory address of the target command data; enabling the virtual machine monitor to assign a virtual device identifier of the target virtual device to the command initial information, taking the command initial information and the virtual device identifier as command encryption information, sending the command encryption information to a processor, and enabling the processor to perform the command processing method according to the first aspect.

Optionally, after sending command initial information to the virtual machine monitor, the method further includes:
obtaining a result acquisition notification message fed back by the virtual machine monitor; and
obtaining a command result stored in the memory according to the result acquisition notification message.

In a fourth aspect, an embodiment of the present disclosure provides a processor, which is configured with a cryptographic module to perform the command processing method according to the first aspect.

Optionally, the cryptographic module is configured with a device information storage logic, and the device information storage logic is used to store device attribute information of the target virtual device, and a corresponding relationship between the virtual device identifier and memory key information of the target virtual machine is established in the device attribute information of the target virtual device.

Optionally, the cryptographic module is configured with a command processing logic, and the command processing logic is used to execute a target command to obtain a command result of the target command.

In a fifth aspect, an embodiment of the present disclosure provides a virtual machine monitor, which is configured with a command forwarding module, and the command forwarding module is configured to perform the command processing method according to the second aspect.

Optionally, the virtual machine monitor further includes a virtual identifier configuration module, which is configured to record configuration information of a virtual machine and a virtual device.

In a sixth aspect, an embodiment of the present disclosure provides a virtual machine, which is configured with a command processing device, and the command processing device is configured to perform the command processing method according to the third aspect by taking the virtual machine as a target virtual machine.

In a seventh aspect, an embodiment of the present disclosure provides a computing device, including the processor according to the fourth aspect, the virtual machine monitor according to the fifth aspect, and the virtual machine according to the sixth aspect.

In an eighth aspect, an embodiment of the present disclosure provides a computer program product, including one or more computer-executable instructions which, when executed, implement the command processing method according to the first aspect, the second aspect or the third aspect.

The embodiments of the present disclosure provide a command processing method and related device, in which the command processing method applied to a processor includes: acquiring command encryption information sent by a virtual machine monitor, and the command encryption information includes a memory address of target command data and a virtual device identifier of a target virtual device, and the memory encrypts the target command data using a memory key corresponding to a target virtual machine; determining memory key information corresponding to the target virtual machine according to the virtual device identifier; decrypting to obtain a plaintext of the target command data based on the memory key information and the memory address of the target command data; and sending the plaintext of the target command data to the target virtual device, so that the target virtual device executes a target command and feeds back a command result of the target command.

As can be seen, in the embodiments of the present disclosure, when the target command data is written into the memory, the memory encrypts the target command data using the memory key corresponding to the target virtual machine, and in a command processing procedure, the memory key information of the allocated target virtual machine is determined through the virtual device identifier in the command encryption information, thereby decrypting the target command data. That is, the embodiments of the present disclosure add an additional encryption and decryption process for the command data, thereby enabling the command data to be stored in an encrypted manner. Meanwhile, when the command data is to be used, the command data may be decrypted through the memory key information, so that the command data stored in the memory of the virtual machine in the embodiments of the present disclosure can adapt to the encryption mechanism of the memory, thereby improving the data security of the virtual machine in the process of calling the virtual device.

### BRIEF DESCRIPTION OF THE DRAWINGS

In order to more clearly illustrate the technical solutions in the embodiments of the present disclosure or in the prior art, the drawings to be used in the description of the embodiments or the prior art will be briefly introduced as follows. Obviously, the drawings concerned in the following description only illustrate some embodiments of the present disclosure, and those of ordinary skill in the art can obtain other drawings from the provided drawings without paying any inventive labor.
FIG. 1 illustrates an optional architecture diagram of a computing device using virtualization technology;
FIG. 2 illustrates an optional architecture diagram of a computing device using virtualization technology according to an embodiment of the present disclosure;
FIG. 3 illustrates an optional flowchart of a command processing method according to an embodiment of the present disclosure;
FIG. 4 illustrates an optional flowchart of Step S120 according to an embodiment of the present disclosure;
FIG. 5 illustrates an optional flowchart of a command processing method according to another embodiment of the present disclosure;
FIG. 6 illustrates an optional flowchart of Step S170 according to an embodiment of the present disclosure; and
FIG. 7 illustrates an optional flowchart of a virtual device configuration method according to an embodiment of the present disclosure.

### DESCRIPTION OF EMBODIMENTS

The technical solutions in the embodiments of the present disclosure will be clearly and completely described below in conjunction with the drawings for the embodiments of the present disclosure. Obviously, those described are merely parts, rather than all, of the embodiments of the present disclosure. Based on the embodiments of the present disclosure, any other embodiment obtained by those of ordinary skill in the art without paying any inventive labor should fall within the protection scope of the present disclosure.

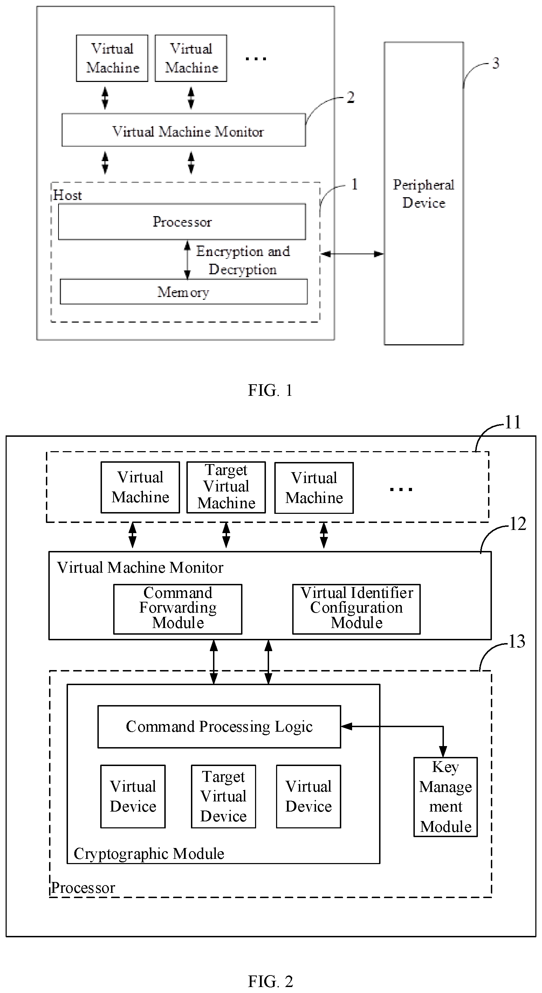

As an optional example of the embodiments of the present disclosure, FIG. 1 exemplarily illustrates an optional architecture diagram of a computing device using virtualization technology. It should be noted that this block diagram is illustrated to facilitate the understanding the embodiments of the present disclosure, and the embodiments of the present disclosure are not limited to the architecture illustrated in FIG. 1.

Referring to FIG. 1, a virtual architecture may include a host 1, a virtual machine monitor 2 and a peripheral device 3.

The host 1 may be understood as a physical host, including a processor and a memory, and the virtual machine monitor 2 runs on the hardware provided by the host 1. In an optional example, the processor in the host 1 may run a host operating system and configure the Virtual Machine Monitor (VMM) 2 through the host operating system running therein. Through the virtualization technology, the processor in the host 1 may also virtualize a plurality of Virtual Machines (VMs), for which the virtual machine monitor 2 manages the allocation (configuration) of resources (e.g., memory resources, peripheral resources, or the like).

In order to ensure the security and independence of data among the virtual machines, security virtualization technology may configure the corresponding keys for the virtual machines, so that memory data of the virtual machines may be encrypted using the corresponding keys and then stored in the memory of host 1, and decrypted using the corresponding keys when the virtual machines require access. In some scenarios, a virtual machine generated by the security virtualization technology using an encryption mechanism may be called a Confidential Virtual Machine (CVM).

The peripheral device 3 provides peripheral resources for the host, so that the host 1 can carry out resource allocation and use based on the peripheral resources provided by the peripheral device 3. The peripheral device 3 may be, for example, a cryptographic card (e.g., a Peripheral Component Interconnect (PCI) cryptographic card), a Graphics Processing Unit (GPU), a General-Purpose Graphics Processing Unit (GPGPU), or an accelerator card for Artificial Intelligence (AI) and deep learning. In some optional implementations, the host may configure peripheral devices as virtual devices according to real-time requirements, and configure the virtual devices as available peripheral resources of the virtual machines.

However, the inventor considers that there are security risks when the virtual machines run the virtual devices.

This is because, in the virtualization technology, the virtual device may be directly assigned to the virtual machine via passed through. Based on this Direct Memory Access (DMA) mechanism, when the virtual device is enabled to execute a specific command, the corresponding command data needs to be directly transmitted from the memory to the virtual device of the virtual machine, so that the virtual device can execute the corresponding command based on the command data.

However, the virtual device, such as the PCI cryptographic card, usually does not have the function of decrypting encrypted data in the memory, and can only accept plaintext data of the command data. In this case, in order to meet the requirements of the peripheral device for the command data, even in a scenario where the virtual machine is allocated with a memory having the encryption mechanism, the virtual machine needs to use an unencrypted memory to store the corresponding command data (e.g., using a special memory region with the memory encryption disabled to store the corresponding command data to ensure that the command data remains in plaintext), which makes the corresponding command data face inevitable security risks.

In view of this problem, the embodiments of the present disclosure provide a command processing method and related device, in which the command processing method applied to a processor includes: acquiring command encryption information sent by a virtual machine monitor, and the command encryption information includes a memory address of target command data and a virtual device identifier of a target virtual device, and the memory encrypts the target command data using a memory key corresponding to a target virtual machine; determining memory key information corresponding to the target virtual machine according to the virtual device identifier; decrypting to obtain a plaintext of the target command data based on the memory key information and the memory address of the target command data; and sending the plaintext of the target command data to the target virtual device, so that the target virtual device executes a target command and feeds back a command result of the target command.

As can be seen, in the embodiments of the present disclosure, when the target command data is written into the memory, the memory encrypts the target command data using the memory key corresponding to the target virtual machine, and in a command processing procedure, the memory key information of the allocated target virtual machine is determined through the virtual device identifier in the command encryption information, thereby decrypting the target command data. That is, the embodiments of the present disclosure add an additional encryption and decryption process for the command data, thereby enabling the command data to be stored in an encrypted manner. Meanwhile, when the command data is to be used, the command data may be decrypted through the memory key information, so that the command data stored in the memory of the virtual machine in the embodiments of the present disclosure can adapt to the encryption mechanism of the memory, thereby improving the data security of the virtual machine in the process of calling the virtual device.

Next, the command processing solution according to the embodiments of the present disclosure will be described in detail.

Referring to FIG. 2, which illustrates an optional architecture diagram of a computing device using virtualization technology, and the architecture virtualizes a plurality of virtual machines based on virtualization technology, including a virtual machine layer 11 composed of the plurality of virtual machines, a virtual machine monitor 12 and a processor (i.e. Central Processing Unit (CPU)) 13.

In this embodiment, the CPU 13 is configured with a cryptographic module, in which a plurality of virtual devices may be virtualized and allocated to the virtual machines according to the requirements of the virtual devices, so that the virtual machines can regard the virtual devices allocated thereto as peripheral devices exclusive to the virtual machines, and the virtual machines can call the resources of the virtual devices to execute corresponding commands according to the requests for the virtual devices. In some examples, the virtual device may also be called a Virtual Cryptographic Module (VCM). One physical cryptographic module may virtualize a plurality of VCMs, and one VCM may be allocated to one virtual machine for use. The virtual cryptographic module can provide the complete functions of the cryptographic module, thereby making the virtual machine consider that it owns an independent cryptographic module.

To be noted, the cryptographic module is located in the processor 13. However, the virtual device virtualized by the cryptographic module provides calling interfaces to the virtual machine, thus enabling the virtual machine to execute the corresponding command based on the resources provided by the cryptographic module. Therefore, from the perspective of the virtual machine, both the calling and the function realization of the virtual device are achieved in the form of the peripheral device, so that the virtual device virtualized by the cryptographic module can be regarded as the peripheral device.

In this embodiment, taking a virtual machine as an example, which may be called the target virtual machine, the corresponding virtual device may be called the target virtual device, the issued command to be executed by the target virtual device may be called the target command, and the command data corresponding to the target command may be called the target command data. It can be understood that the target virtual device is a virtual device allocated to the target virtual machine. When the target virtual device is required to execute the target command, the target command data is first written into the memory, and the memory is capable of encrypting the target command data using the memory key corresponding to the target virtual machine, and send command initial information including a memory address of the target command data to the virtual machine monitor.

Further, the virtual machine monitor 12 in the virtual architecture is further configured with a command forwarding module and a virtual identifier configuration module, so as to configure the virtual device identifier of the target virtual machine for the corresponding command initial information when forwarding the command initial information.

In this embodiment, the virtual device is configured with the virtual device identifier, so as to obtain the memory key information corresponding to the target virtual machine according to the virtual device identifier, and decrypt to obtain a plaintext of the target command data based on the memory key information and the memory address of the target command data, thereby sending the plaintext of the target command data to the target virtual device.

Correspondingly, the configured target virtual device executes the target command; the cryptographic module further encrypts the command result of the target command based on the memory key corresponding to the target virtual machine and stores the encrypted result of the target command in the memory, and feeds back result information of the command result to the target virtual machine.

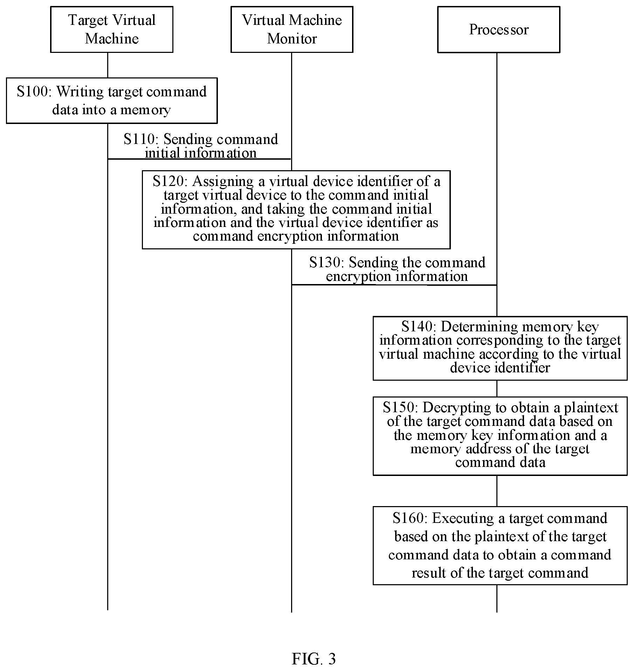

Based on the optional architecture of the computing device, the embodiments of the present disclosure further provide a command processing method, which may be applied to the computing device with the above architecture or any other architecture capable of implementing the method. FIG. 3 illustrates an optional flowchart of a command processing method according to an embodiment of the present disclosure, which is performed when a target virtual machine issues a target command to a target virtual device. Referring to FIG. 3, the method includes the following steps.

S100: a target virtual machine writes target command data into a memory.

In this embodiment, the target virtual machine may be understood as any virtual machine produced by virtualization, which performs a command data interaction with its configured virtual device based on the memory, and encrypts its memory data based on the security virtualization technology, i.e., encrypts the memory data stored in the memory using a key corresponding to the virtual machine and stores the encrypted memory data in the memory, and decrypts and reads the memory data using the key when reading is required.

In combination with the foregoing, the virtual device corresponding to the target virtual machine, i.e., the virtual device configured for the target virtual machine, may be called the target virtual device, the issued command to be executed by the target virtual device may be called the target command, and the command data corresponding to the target command may be called the target command data.

It can be understood that when the target virtual device is required to execute the target command, the target command data is first written into the memory, and the memory is capable of encrypting the target command data using the memory key corresponding to the target virtual machine. In some optional examples, the target command data stored in the memory may also be called an Encrypted Command Buffer (ECB).

To be noted, the target virtual machine (i.e., the virtual machine), functioning as a client, does not need to acquire the corresponding memory key, and only a hardware device of the host determines the memory key corresponding to the target virtual machine based on a preset mechanism in an underlying processing logic, and encrypts and decrypts data using the memory key. Accordingly, at an end of the target virtual machine, it is unnecessary to acquire the specific encryption information, and it may not even be aware that the corresponding memory data has been encrypted.

Similarly, the virtual machine monitor, as merely an allocation and management party of resources, does not need to acquire the memory key corresponding to the target virtual machine (i.e., the virtual machine), thereby ensuring the data security of the target virtual machine to the greatest extent.

It can be understood that when the virtual machine uses the unencrypted memory to store the corresponding command data (i.e., the command data is in plaintext), there may be a risk that the corresponding command data is stolen by the virtual machine monitor, and the solution proposed by the embodiment of the present disclosure can solve this problem.

Step S110: the target virtual machine sends command initial information to a virtual machine monitor.

In this embodiment, the command initial information at least includes the memory address of the target command data, so that the corresponding processing can be performed based on the memory address. In an example where the target command data stored in the memory is used as an encrypted command buffer, the memory address of the target command data is a memory address of the encrypted command buffer.

Accordingly, the virtual machine monitor is capable of acquiring the command initial information sent by the target virtual machine. In an optional example, the command initial information sent by the target virtual machine may be acquired by the command forwarding module in the virtual machine monitor.

Step S120: the virtual machine monitor assigns a virtual device identifier of a target virtual device to the command initial information, and takes the command initial information and the virtual device identifier as command encryption information.

The virtual device identifier (also called VID) may be understood as identifier information that indicates the virtual device. When a virtual device is allocated to a corresponding virtual machine, the virtual device is bound to the virtual machine according to the virtual device identifier, so that the virtual machine bound to the virtual device can be determined according to the virtual device identifier, and then the memory key information of the corresponding virtual machine can be obtained.

It can be understood that after the configuration between the virtual machine and the virtual device (i.e., the binding (associating) between the virtual device and the virtual machine) is completed, the virtual device identifier of the target virtual device corresponding to the target virtual machine may be determined based on the sender of the command initial information ( i.e., the target virtual machine). In an optional example, the command initial information may further carry identity information of the target virtual machine or identity information of the virtual device, so that the virtual device identifier can be determined based on the identity information of the target virtual machine or the identity information of the virtual device carried in the command initial information. The virtual device identifier is then configured into the command initial information, thereby taking the command initial information and the virtual device identifier as the command encryption information.

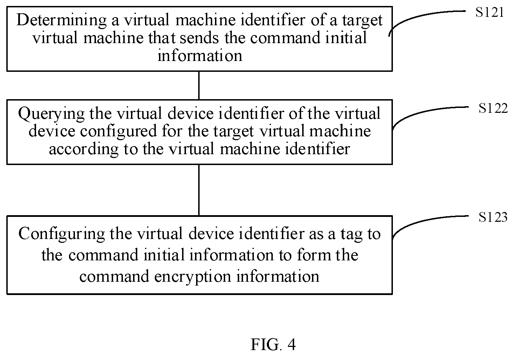

In an optional example, referring to the optional flowchart of Step S120 illustrated in FIG. 4, Step S120 may include the following steps.

Step S121: determining a virtual machine identifier of a target virtual machine that sends the command initial information.

In combination with the foregoing, the virtual machine monitor may determine the virtual machine identifier of the target virtual machine based on the sender of the command initial information, or the identity information of the target virtual machine may be further carried in the command initial information, and the virtual machine identifier of the target virtual machine may be determined based on the identity information of the target virtual machine.

Step S122: querying the virtual device identifier of the virtual device configured for the target virtual machine according to the virtual machine identifier.

To be noted, the virtual machine monitor may record configuration information of the virtual machine and the virtual device (e.g., binding information (association information) of the virtual machine and the virtual device), so that the virtual device identifier of the target virtual device configured for the target virtual machine can be determined by query.

In a specific example, the configuration information of the virtual machine and the virtual device may be recorded in the virtual identifier configuration module, and accordingly, in Step S122, the command forwarding module in the virtual machine monitor may query and obtain the virtual device identifier from the virtual identifier configuration module.

Step S123: configuring the virtual device identifier as a tag to the command initial information to form the command encryption information.

In an optional example, the virtual device identifier may be tagged (i.e., added) to the command initial information to form the command encryption information.

It can be understood that since the target command data is encrypted and the encrypted target command data is stored in the memory, the virtual machine monitor cannot parse and obtain the content thereof, so that the data security of the virtual device can be protected.

In an optional example, Step S120 may be performed by the command forwarding module in the virtual machine monitor.

Continuing to refer to FIG. 3, Step S130 is performed, where the virtual machine monitor sends the command encryption information to the processor.

The command encryption information at least includes the memory address of the target command data and the virtual device identifier of the target virtual device, so that the processor can determine the memory key according to the command encryption information, and then decrypt the memory data under the DMA mechanism.

Accordingly, the processor may obtain the command encryption information sent by the virtual machine monitor. In an optional example, the command encryption information may be sent by the command forwarding module in the virtual machine monitor to the cryptographic module of the processor.

Step S140: a processor determines memory key information corresponding to the target virtual machine according to the virtual device identifier.

Since the command encryption information is configured with the virtual device identifier, the memory key information of the corresponding target virtual machine may be determined according to the virtual device identifier.

In a specific example, the memory key information may be determined according to preconfigured device attribute information of the virtual device in the processor. In this embodiment, a corresponding relationship between the virtual device identifier and the memory key information of the target virtual machine is established in the device attribute information of the target virtual device. Specifically, the device attribute information of the virtual device may be the context of the virtual device, in which the relevant configuration information of the virtual machine to which the target virtual device is configured may be stored. For example, in the case of the target virtual device, the context thereof at least includes the memory key information of the target virtual machine. In a specific example, the memory key information may be a memory key identifier, and taking the memory key as an MEK as an example, the memory key identifier is an ID of the MEK.

In an optional example, Step S140 may be performed by a cryptographic module in the processor. Specifically, a device information storage logic may be configured in the cryptographic module to store the device attribute information of the target virtual device, so that the cryptographic module can determine the memory key information of the target virtual machine according to the information stored in the device information storage logic.

Step S150: the processor decrypts to obtain a plaintext of the target command data based on the memory key information and a memory address of the target command data.

After the specific memory key information is determined, the target command data may be decrypted.

In an optional example, a command processing logic may be configured in the cryptographic module of the processor to decrypt to obtain the plaintext of the target command data based on the memory key information and the memory address of the target command data. In this embodiment, the memory key information may be, for example, an identifier (i.e., ID) of a Memory Encryption Key (MEK).

In this embodiment, in a further optional example, the processor may be further configured with a key management module to manage a memory key, specifically, for example, recording a corresponding relationship between the memory key information and the memory key, so as to determine the specific memory key according to the memory key information.

Step S160: the processor executes a target command based on the plaintext of the target command data to obtain a command result of the target command.

It can be understood that after the target command data is decrypted, the plaintext of the target command data may be determined, and the command processing logic of the cryptographic module may be enabled to execute the target command based on the plaintext to obtain the command result of the target command. In a specific example, the execution of the target command may be, for example, using the target virtual device to perform a cryptographic operation, such as an encryption operation or a decryption operation, on data to be operated in the target command data. In this embodiment, the target command is a command corresponding to the target command data.

In an example where memory encryption is supported, the processor may configure the corresponding memory keys for the virtual machines in advance, and when different virtual machines access the memory, the processor may automatically encrypt and decrypt the memory data using the corresponding memory keys. For example, the processor may utilize an encryption and decryption engine to encrypt and decrypt the memory data using the corresponding memory key according to virtual machine identifiers (ASIDs) of the virtual machines, and different virtual machines correspond to different virtual machine identifiers and different memory keys. The command processing method according to the embodiment of the present disclosure enables the interaction with the corresponding virtual devices to adapt to the memory encryption scheme, thereby improving the security of the command data.

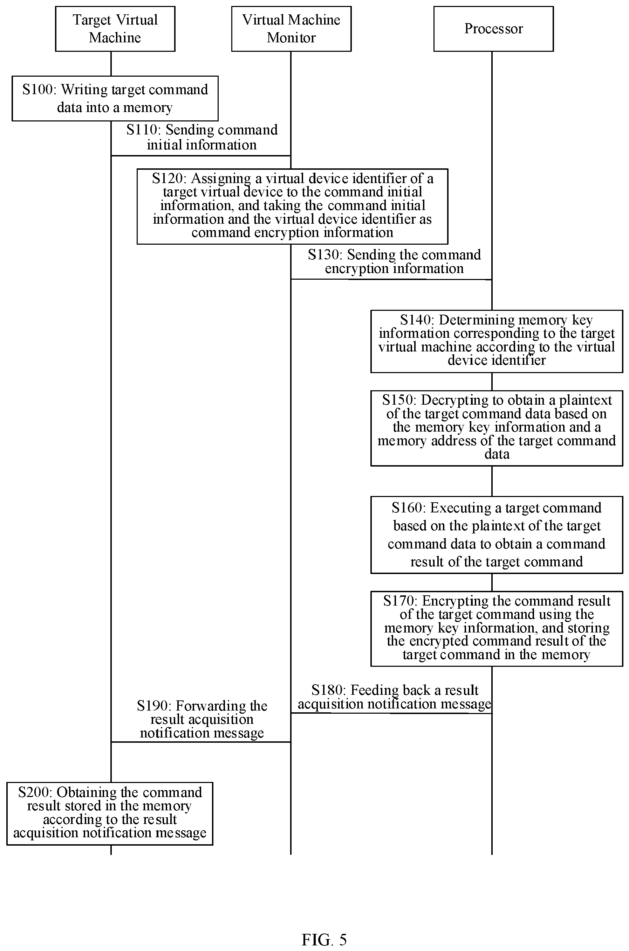

In a further example, the embodiments of the present disclosure further provide a processing procedure of a command result. Specifically, referring to an optional flowchart of a command processing method according to another embodiment of the present disclosure illustrated in FIG. 5, the processing procedure of the command result further includes:
Step S170: the processor encrypts the command result of the target command using the memory key information, and stores the encrypted command result of the target command in the memory.

After the command result fed back by the target virtual device is obtained, the command processing logic of the cryptographic module may further encrypt the command result using the memory key information, and store the encrypted command result of the target command in the memory.

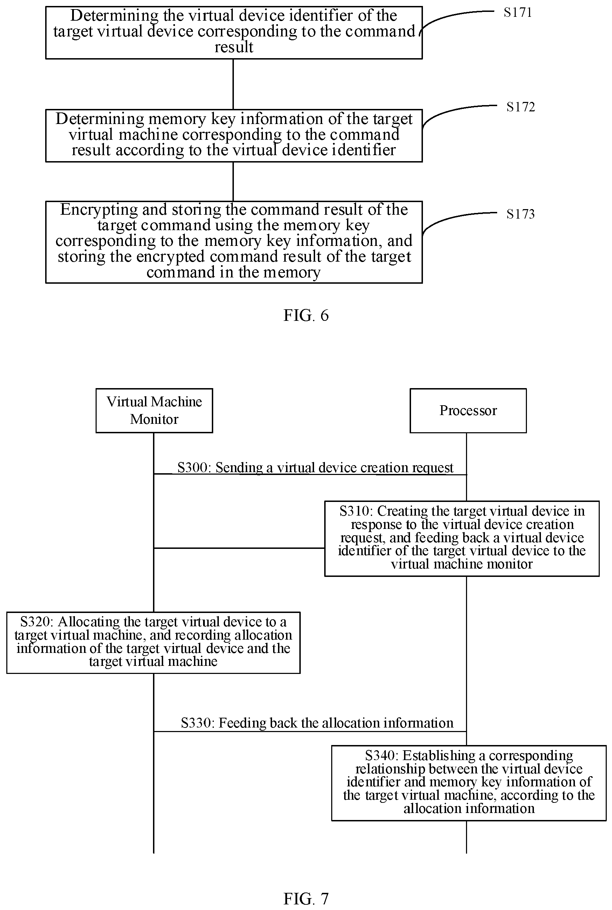

In a specific example, referring to an optional flowchart of Step S170 illustrated in FIG. 6, Step S170 may include:
Step S171: determining the virtual device identifier of the target virtual device corresponding to the command result.

It can be understood that the processor may determine the specific virtual device identifier based on the command result.

Step S172: determining memory key information of the target virtual machine corresponding to the command result according to the virtual device identifier.

In this embodiment, the memory key information of the target virtual machine may be determined based on preconfigured device attribute information of the virtual device in the processor. Please refer to the description of Step S140 for detail.

Step S173: encrypting the command result of the target command using the memory key corresponding to the memory key information, and storing the encrypted command result of the target command in the memory.

After the memory key information is determined, the corresponding memory key may be determined based on the memory key information, and then the command result of the target command is encrypted using the memory key, and the encrypted command result of the target command is stored in the memory.

In this embodiment, Step S170 may be performed based on the command processing logic in the cryptographic module.

Continuing to refer to FIG. 5, Step S180 is performed, where the processor feeds back a result acquisition notification message of the command result to the virtual machine monitor.

In this embodiment, the result acquisition notification message of the command result is fed back to the virtual machine monitor, so that the virtual machine monitor forwards the result acquisition notification message to the target virtual machine.

The result acquisition notification message indicates that the command result of the target command has been obtained, so that the target virtual machine can read the corresponding command result in a preset memory page after obtaining the result acquisition notification message.

In this embodiment, Step S180 may be performed based on the command processing logic in the cryptographic module.

Step S190: the virtual machine monitor forwards the result acquisition notification message to the target virtual machine.

In this embodiment, Step S190 may be performed based on the command forwarding module in the virtual machine monitor.

Step S200: the target virtual machine obtains the command result stored in the memory according to the result acquisition notification message.

It can be understood that in an example where memory encryption is supported, the processor may configure the corresponding memory keys for the virtual machines in advance, and when the virtual machines access the memory, the processor may automatically encrypt and decrypt the memory data using the corresponding memory keys. Accordingly, after obtaining the result acquisition notification message, the target virtual machine is capable of directly accessing the command result based on the normal memory access procedure.

In a further optional example, the embodiments of the present disclosure further provide a virtual device configuration method compatible with the aforementioned command processing solution. The virtual device configuration method is used to configure virtual devices for virtual machines and provides a basis for the command processing method according to the embodiments of the present disclosure. Specifically, the virtual device configuration method is performed before the command processing method of the present disclosure. Referring to an optional flowchart of a virtual device configuration method illustrated in FIG. 7, the virtual device configuration method includes:

Step S300: a virtual machine monitor sends a virtual device creation request to a processor.

The virtual device creation request is sent to request the processor to create the virtual device. In this embodiment, taking the creation of the target virtual device for the target virtual machine as an example, the virtual device creation request is used to request the processor to create the target virtual device.

In a specific example, a cryptographic module in the processor can provide a virtual device creation interface for the virtual machine monitor, and the virtual machine monitor can invoke the virtual device creation interface to send the virtual device creation request, thereby triggering the processor to initiate a creation procedure of the virtual device.

To be noted, the creation of the virtual device may be performed before or after the creation procedure of the target virtual machine; and when the creation of the virtual device is performed after the creation procedure of the target virtual machine, identity information of the corresponding target virtual machine may be sent to the processor at the same time, so that the processor can configure corresponding information based on the identity information or establish a record of correspondence information between the target virtual device and the target virtual machine.

Step S310: the processor creates the target virtual device in response to the virtual device creation request, and feeds back a virtual device identifier of the target virtual device to the virtual machine monitor.

In this embodiment, the target virtual device is an exclusive resource allocated to the target virtual machine, but it may be regarded as an independent device on the side of the target virtual machine.

The processor can create the target virtual device in response to the virtual device creation request, and feeds back, after the creation is completed, the virtual device identifier of the target virtual device to the virtual machine monitor, so that the virtual machine monitor can bind (associate) the target virtual device and the target virtual machine and record the corresponding binding relationship (association relationship).

To be noted, the procedure of creating the target virtual device includes creating device attribute information of the target virtual device, so as to record attribute information of the target virtual device according to the device attribute information of the target virtual device.

In an optional example, the device attribute information of the target virtual device may at least include the configuration information of the target virtual device and the target virtual machine, and the memory key information corresponding to the target virtual machine. It can be understood that when the target virtual device is created and the configuration relationship between the target virtual device and the target virtual machine has not been established, the corresponding configuration information and the memory key information in the device attribute information of the target virtual device may be invalid information or blank information, and will be written after the configuration relationship between the target virtual device and the target virtual machine is established.

Step S320: the virtual machine monitor allocates the target virtual device to a target virtual machine, and records allocation information of the target virtual device and the target virtual machine.

In this embodiment, by recording the allocation information of the target virtual device and the target virtual machine, an information base is provided for assigning the virtual device identifier of the target virtual device to the command initial information sent by the target virtual machine in the command processing procedure.

In a specific example, the virtual machine monitor may realize the allocation described in this step by binding the target virtual device to the target virtual machine, and accordingly, the allocation information may be the binding information (association relationship) of the target virtual device and the target virtual machine. By binding the target virtual device to the target virtual machine, the target virtual machine can legally use the exclusive resources configured therefor.

In a specific example, the cryptographic module in the processor may provide a virtual device binding interface for the virtual machine monitor, and the virtual machine monitor can invoke the virtual device binding interface to send the allocation information (e.g., binding information) of the target virtual device and the target virtual machine.

In this embodiment, the allocation information of the target virtual device and the target virtual machine may be recorded in the virtual identifier configuration module, so as to provide information support for the command processing method according to the embodiments of the present disclosure. In a specific example, the virtual machine monitor may record the allocation information according to the target virtual device identifier.

In an optional example, the virtual machine monitor may allocate a target virtual device to a target virtual machine when the target virtual machine is started, or may allocate the target virtual device to the target virtual machine when the target virtual machine is created, which is not specifically limited in the embodiments of the present disclosure.

Step S330: the virtual machine monitor feeds back the allocation information to the processor; and
Step S340: the processor establishes a corresponding relationship between the virtual device identifier and memory key information of the target virtual machine, according to the allocation information.

By establishing the corresponding relationship between the virtual device identifier and the memory key information of the target virtual machine, information support is provided for the step of determining the memory key information corresponding to the target virtual machine according to the virtual device identifier in the command processing procedure.

In a specific example, the allocation information may be recorded in the device attribute information corresponding to the target virtual device, and the memory key information of the target virtual machine may be obtained by query, and then the memory key information may be recorded in the device attribute information corresponding to the target virtual device, thereby establishing the corresponding relationship between the virtual device identifier and the memory key information of the target virtual machine.

In this embodiment, the processor may record the configuration information and the memory key information into a device information storage logic for storing the device attribute information of the target virtual device, thereby providing information support for the command processing method according to the embodiments of the present disclosure.

It can be understood that the resource overhead of the creation of the virtual device in the embodiments of the present disclosure mainly includes the memory occupied by the device attribute information of the virtual device and the virtual device identifier configured for the virtual device, and the resources consumed in this solution are obviously insignificant under the background of increasingly rich memory resources.

To be noted, in some conventional peripheral device virtualization technologies, such as single root I/O virtualization (SRIOV) technology applied to PCI devices, support from the hardware resources of the peripheral devices is required, which leads to the limitation of the data of the peripheral devices that can be created. In comparison, the embodiments of the present disclosure can expand the number of the virtual devices with less resources, thereby imposing fewer limitations on the number of the virtual devices created.

In addition, in some conventional peripheral device virtualization technologies, one virtual device appears as an independent peripheral device on a bus, so it is necessary to configure the corresponding device number and occupy corresponding bus resources during interaction, while the embodiment of the present disclosure executes the corresponding command based on the cryptographic module inside the processor, so it is unnecessary to occupy the bus resources. That is, in comparison, the command processing method according to the embodiments of the present disclosure can reduce the consumption of resources.

The embodiments of the present disclosure further provide a virtual machine configured with a command processing device, and the command processing device is configured to take the virtual machine as a target virtual machine and perform the command processing method applied to the target virtual machine in the aforementioned embodiments.

The embodiments of the present disclosure further provide a computing device. An optional architecture of the computing device may refer to FIG. 2, including the processor according to the embodiment of the present disclosure, the virtual machine monitor according to the embodiment of the present disclosure and the virtual machine according to the embodiment of the present disclosure.

The embodiments of the present disclosure further provide a computer program product, including one or more computer-executable instructions, which, when executed, implement the aforementioned command processing method.

A plurality of solutions of the embodiments of the present disclosure have been described above, and various optional modes introduced by the solutions may be combined with each other and cross-referenced without conflict, thereby extending various possible solutions, all of which can be regarded as those revealed and disclosed by the embodiments of the present disclosure.

Although the embodiments of the present disclosure have been revealed above, the present disclosure is not limited thereto. Any person skilled in the art can make various changes and modifications without departing from the spirit and the scope of the present disclosure, and the protection scope of the present disclosure should be based on the scope defined by the claims.

## Claims

1. A command processing method, which is applied to a processor, wherein the command processing method comprises:
acquiring command encryption information sent by a virtual machine monitor, wherein the command encryption information comprises a memory address of target command data and a virtual device identifier of a target virtual device, and the memory encrypts the target command data using a memory key corresponding to the target virtual machine;
determining memory key information corresponding to the target virtual machine according to the virtual device identifier;
decrypting to obtain a plaintext of the target command data based on the memory key information and the memory address of the target command data; and
executing a target command based on the plaintext of the target command data to obtain a command result of the target command.

2. The command processing method according to claim 1, wherein determining the memory key information corresponding to the target virtual machine according to the virtual device identifier comprises: determining the memory key information according to preconfigured device attribute information of the virtual device in the processor.

3. The command processing method according to claim 1, wherein after executing the target command based on the plaintext of the target command data to obtain the command result of the target command, the method further comprises:
encrypting the command result of the target command using the memory key information, and storing the encrypted command result of the target command in the memory; and
feeding back a result acquisition notification message of the command result to the virtual machine monitor, so that the virtual machine monitor forwards the result acquisition notification message to the target virtual machine.

4. The command processing method according to claim 3, wherein encrypting the command result of the target command using the memory key information, and storing the encrypted command result of the target command in the memory comprises:
determining the virtual device identifier of the target virtual device corresponding to the command result;
determining the memory key information of the target virtual machine corresponding to the command result according to the virtual device identifier; and
encrypting the command result of the target command using the memory key corresponding to the memory key information, and storing the encrypted command result of the target command in the memory.

5. The command processing method according to claim 1, wherein before acquiring command encryption information sent by the virtual machine monitor, the method further comprises:
creating a target virtual device in response to a virtual device creation request sent by the virtual machine monitor, and feeding back a virtual device identifier of the target virtual device to the virtual machine monitor; and
establishing, after the target virtual device is allocated to the target virtual machine by the virtual machine monitor, a corresponding relationship between the virtual device identifier and the memory key information of the target virtual machine according to allocation information fed back by the virtual machine monitor.

6. The command processing method according to claim 5, wherein establishing the corresponding relationship between the virtual device identifier and the memory key information of the target virtual machine according to the allocation information fed back by the virtual machine monitor comprises:
recording the allocation information into device attribute information corresponding to the target virtual device;
querying and obtaining the memory key information of the target virtual device; and
recording the memory key information into the device attribute information corresponding to the target virtual device.

7. A command processing method, which is applied to a virtual machine monitor, wherein the command processing method comprises:
acquiring command initial information sent by a target virtual machine, wherein the command initial information comprises a memory address of target command data, and the memory encrypts the target command data using a memory key corresponding to the target virtual machine;
assigning a virtual device identifier of a target virtual device to the command initial information, and taking the command initial information and the virtual device identifier as command encryption information; and
sending the command encryption information to a processor, so that the processor executes the command processing method according to claim 1.

8. The command processing method according to claim 7, wherein assigning the virtual device identifier of the target virtual device to the command initial information comprises:
determining a virtual machine identifier of the target virtual machine that sends the command initial information;
querying a virtual device identifier of a virtual device configured for the target virtual machine according to the virtual machine identifier; and
configuring the virtual device identifier as a tag to the command initial information to form the command encryption information.

9. The command processing method according to claim 7, wherein after sending the command encryption information to the processor, so that the processor performs the command processing method according to claim 1, the method further comprises:
acquiring and forwarding a result acquisition notification message fed back by the processor to the target virtual machine.

10. The command processing method according to claim 7, wherein before acquiring command initial information sent by the target virtual machine, the method further comprises:
sending a virtual device creation request to the processor, so that the processor creates the target virtual device in response to the virtual device creation request, and feeds back a virtual device identifier of the target virtual device;
allocating the target virtual device to the target virtual machine, and recording allocation information of the target virtual device and the target virtual machine; and
feeding back the allocation information to the processor, so that the processor establishes a corresponding relationship between the virtual device identifier and memory key information of the target virtual machine according to the allocation information.

11. A command processing method, which is applied to a target virtual machine that is allocated with a target virtual device, wherein the command processing method comprises:
writing target command data into a memory, wherein the memory encrypts the target command data using a memory key corresponding to the target virtual machine; and
sending command initial information to a virtual machine monitor, wherein the command initial information comprises a memory address of the target command data; enabling the virtual machine monitor to assign a virtual device identifier of the target virtual device to the command initial information, taking the command initial information and the virtual device identifier as command encryption information, sending the command encryption information to a processor, and enabling the processor to perform the command processing method according to claim 1.

12. The command processing method according to claim 11, wherein after sending command initial information to the virtual machine monitor, the method further comprises:
obtaining a result acquisition notification message fed back by the virtual machine monitor; and
obtaining a command result stored in the memory according to the result acquisition notification message.

13. A processor, which is configured with a cryptographic module to perform the command processing method according to any one of claims 1 to 6.

14. The processor according to claim 13, wherein the cryptographic module is configured with a device information storage logic, wherein the device information storage logic is used to store device attribute information of the target virtual device, and a corresponding relationship between the virtual device identifier and memory key information of the target virtual machine is established in the device attribute information of the target virtual device.

15. The processor according to claim 13, wherein the cryptographic module is configured with a command processing logic, wherein the command processing logic is used to execute a target command to obtain a command result of the target command.

16. A virtual machine monitor, which is configured with a command forwarding module, wherein the command forwarding module is configured to perform the command processing method according to any one of claims 7 to 10.

17. The virtual machine monitor according to claim 16, further comprising a virtual identifier configuration module, which is configured to record configuration information of a virtual machine and a virtual device.

18. A virtual machine, which is configured with a command processing device, wherein the command processing device is configured to perform the command processing method according to any one of claims 11 and 12 by taking the virtual machine as a target virtual machine.

19. A computing device, comprising the processor according to any one of claims 13 to 15, the virtual machine monitor according to any one of claims 16 and 17, and the virtual machine according to claim 18.

20. A computer program product, comprising one or more computer-executable instructions which, when executed, implement the command processing method according to any one of claims 1 to 12.
